# EUROPEAN PATENT SPECIFICATION

(11) **EP 2 700 853 B1**
(45) Date of publication and mention of the grant of the patent: **25.11.2015**
(21) Application number: 12773969.6
(22) Date of filing: 02.04.2012
(51) Int. Cl.: F25B 41/06, B60H 1/00, F16K 11/18, F16K 1/00, F16K 11/044, F16K 31/04, F25B 13/00, F25B 27/00, F25B 41/04, F25B 40/00

(54) **CONTROL VALVE**
STEUERVENTIL
SOUPAPE DE COMMANDE

(30) Priority: 20.04.2011 JP 2011094417
(43) Date of publication of application: 26.02.2014
(73) Proprietor: TGK CO., Ltd., Tokyo 193-0942 (JP)
(72) Inventor: HIROTA, Hisatoshi, Hachioji-shi Tokyo 193-0942 (JP)
(74) Representative: Schröer, Gernot H.
(86) International application number: PCT/JP2012/002284
(87) International publication number: WO 2012/144137

(56) References cited:
- EP-A2- 1 033 489
- EP-A2- 1 707 811
- JP-A- 8 121 620
- JP-A- 9 026 042
- JP-A- H11 287 354
- JP-A- 2001 153 492
- JP-U- 50 086 325
- JP-U- 57 006 856

## Description

### BACKGROUND OF THE INVENTION

### 1. Field of the Invention

The present invention relates to a control valve and it particularly relates to a control valve suitable for the switching of a plurality of fluid passages through which working fluid flows.

### 2. Description of the Related Art

In recent years the combustion efficiency of a vehicle provided with an internal-combustion engine has improved. This makes it hard for the cooling water, used as a heat source, to rise to a temperature required for the heating. At the same time, the utilization rate of an internal-combustion engine is low in a hybrid vehicle equipped with both an internal-combustion engine and an electric motor drive.

This makes it harder for such the cooling water to be utilized. For an electric-powered car, there is no heat source coming from any internal-combustion engine at all. For this reason, proposed is an automotive air conditioner of heat pump type (see Patent Document 1, for instance).

In this proposed automotive air conditioner of heat pump type, a cycle operation using a refrigerant is carried out not only for the cooling but also for the heating, and a vehicle's passenger compartment can be dehumidified and heated.

Such an automotive air conditioner as described above employs a refrigeration cycle including a compressor, an external heat exchanger, an evaporator, an internal heat exchanger and so forth. The functions of the external heat exchanger are switched between when the air conditioner is in a heating operation and when it is in a cooling operation. At the time the air conditioner is in a heating operation, the external heat exchanger functions as an evaporator. At this time, the internal heat exchanger radiates heat in a process where the refrigerant circulates in the refrigeration cycle, and the thus radiated heat heats air inside the passenger compartment. At the time the air conditioner is in a cooling operation, the external heat exchanger functions as a condenser. At this time, the refrigerant condensed by the external heat exchanger is evaporated by the evaporator and, the evaporative latent heat cools the air of the interior of the vehicle. In so doing, the air in the passenger compartment is also dehumidified. In order to switch the functions between the heating operation and the cooling operation, a plurality of refrigerant circulation passages are provided in the refrigeration cycle, and various types of control valves used to switch the flow of each refrigerant circulation passage are provided.

### Related-Art Documents

### [Patent Document]

(1) Japanese Unexamined Patent Application Publication (Kokai) No. Hei09-240266.
(2) JP 11 287 354 A

### Disclosure of Invention

### Problems to be Solved by the Invention

Where many control valves are used in such an automotive air conditioner, the cost naturally increases and the problem of limited space for installation may occur. Thus it is desirable that the number of control valves and the cost of components used be as small as practicable. At the same time, while the number of control valves and the cost are suppressed, an excellent air-conditioning performance according to an operation state needs to be ensured.

A purpose of the present invention is to totally reduce the increased cost for the control valves used to switch a plurality of fluid passages through which working fluid flows.

### Means for Solving the Problem

In order to resolve the aforementioned problems, a control valve according to one embodiment of the present invention includes: a common body having (1) a lead-in port through which a working fluid is led into, (2) a lead-in/out port through which the working fluid is led into or led out from, (3) a lead-out port from which the working fluid is lead out, (4) a first valve hole through which the lead-in port and the lead-out port communicate, and (5) a second valve hole through which the lead-in/out port and the lead-out port communicate, the second valve hole being disposed along the same axis line as that of the first valve hole; a first valve element configured to regulate an opening degree of a first valve by moving toward and away from the first valve hole; a second valve element configured to open and close a second valve by moving toward and away from the second valve hole and configured to communicate between the lead-in/out port and the lead-out port, the second valve element having a third valve hole whose diameter is smaller than that of the second valve hole; a third valve element configured to regulate an opening of a third valve by moving toward and away from the third valve hole, the third valve element being provided in such a manner as to be integrally displaceable relative to the first valve element; a biasing member configured to bias the second valve element in a closing direction of the second valve and in an opening direction of the third valve; a common actuator configured to electrically control the opening degrees of the first valve, the second valve and the third valve; and a valve actuating member configured to be driven by the actuator in a direction of axis line and configured to transmit a drive force, which acts in opening and closing directions of each valve, to the first valve element.

By employing this embodiment, the first valve, the second valve and the third valve by which a plurality of fluid passages are switched are provided, and the first to third valves are contained in a common body. And the first to third valves are configured as a control valve (composite valve) driven by a common actuator to control the opening and closing thereof. The opening degree of the first valve is directly regulated by driving the valve actuating member. The second valve functions as a check valve as well. When the lead-in/out port functions as a lead-in port according to the flow direction of the working fluid, the second valve is open. When, in contrast, the lead-in/out port functions as a lead-out port as a result of the switching of the flow direction, the second valve is closed. If, on the other hand, the lead-in/out port functions as a lead-out port as described above, the third valve element will be open. The third valve element is driven in such a manner as to be coupled to and operate simultaneously with the first valve element, and the opening degree of the third valve is regulated by the drive of the valve actuating member. The third valve, which is smaller than the second valve in size, can function as an expansion device as well. While the second valve is open, the third valve is closed with the second valve element stopped by the third valve element. At this time, the second valve element is driven in such a manner as to be coupled to and operate simultaneously with the first valve element. As described above, by employing this embodiment, a plurality of valves used to switch a plurality of fluid passages are contained in the common body, and the opening and closing of these valves are effected by driving the common actuator. Hence, the number of bodies and actuators used for a given number of valves can be suppressed.

### Advantageous Effects

The present invention reduces, as a whole, the increased cost for the control valves used to switch a plurality of fluid passages through which working fluid flows.

### Brief Description of Drawings

FIG. 1 illustrates a system structure of an automotive air conditioner according to an embodiment of the present invention;
FIGS. 2A and 2B are each a diagram for explaining an operation of an automotive air conditioner;
FIGS. 3A to FIG. 3C are each a diagram for explaining an operation of an automotive air conditioner;
FIG. 4 is a cross-sectional view showing a structure and operation of a second control valve;
FIG. 5 is a cross-sectional view showing a structure and operation of a second control valve;
FIG. 6 is a cross-sectional view showing a structure and operation of a second control valve; and
FIG. 7 is a cross-sectional view showing a structure and operation of a second control valve.

### Modes for Carrying Out the Invention

The present invention will now be described in detail based on preferred embodiments with reference to the accompanying drawings.

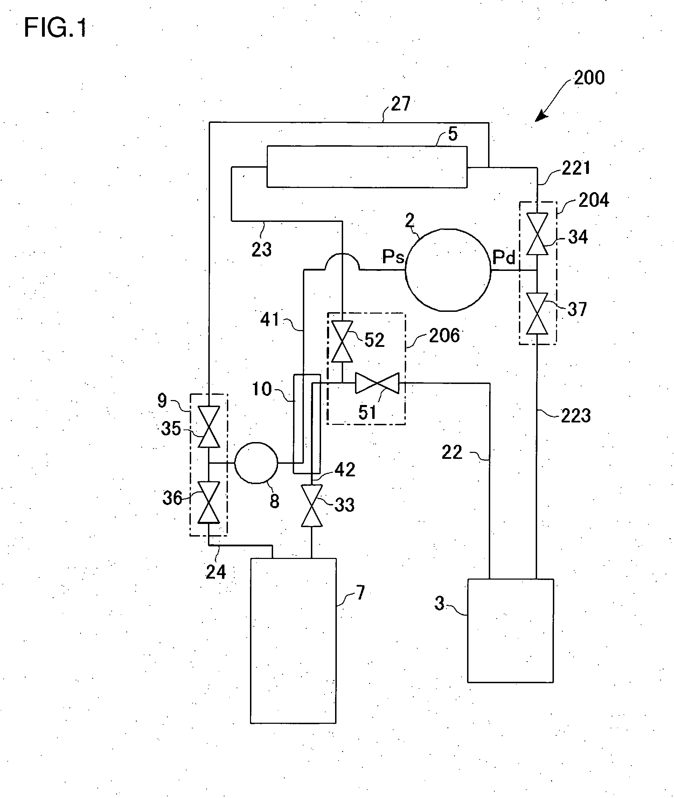

FIG. 1 illustrates a system structure of an automotive air conditioner according to an embodiment. The automotive air conditioner is a constructive reduction to practice of the present invention as an air conditioner of an electric-powered vehicle.

An automotive air conditioner 200 is provided with a refrigeration cycle (refrigerant circulation circuit). In this refrigeration cycle, a compressor 2, an auxiliary condenser 3, an external heat exchanger 5, an evaporator 7, and an accumulator 8 are connected to each other by piping. The automotive air conditioner 200 is configured as a heat pump type air conditioner that performs air conditioning inside a vehicle's passenger compartment using the heat of refrigerant in a process where hydrochlorofluorocarbon (HFO-1234yf), which is used as the refrigerant, circulates within the refrigeration cycle while the refrigerant changes its state.

The compressor 2, the external heat exchanger 5 and the accumulator 8 are provided outside a vehicle's passenger compartment. That is, the compressor 2, the external heat exchanger 5 and the accumulator 8 are installed in an engine room. On the other hand, a duct, in which air is heat-exchanged, is provided inside the passenger compartment. The evaporator 7 is provided upstream of air flow in the duct, whereas the auxiliary condenser 3 is provided downstream thereof. The auxiliary condenser 3 is configured as an internal condenser.

The refrigeration cycle in the automotive air conditioner 200 is configured such that the auxiliary condenser 3 and the external heat exchanger 5 are operable in parallel with each other as a condenser. Also, the refrigeration cycle is configured such that the evaporator 7 and the external heat exchanger 5 are operable in parallel with each other as an evaporator. Air that has been led into the passenger compartment is heated up in a process where air passes through the auxiliary condenser 3. Then a first refrigerant circulation passage, where the refrigerant circulates at the time of cooling, is formed. Also, a second refrigerant circulation passage, where the refrigerant circulates at the time of heating, is formed. And a third refrigerant circulation passage, where the refrigerant circulates at the time of dehumidification, is formed.

In the first refrigerant circulation passage, the refrigerant circulates in the following order: the compressor 2 → the external heat exchanger 5 → the evaporator 7 → the accumulator 8 → the compressor 2. In the second refrigerant circulation passage, the refrigerant circulates in the following order: the compressor 2 → the auxiliary condenser 3 → the external heat exchanger 5 → the accumulator 8 → the compressor 2. In the third refrigerant circulation passage, the refrigerant circulates in the following order: the compressor 2 → the auxiliary condenser 3 → the evaporator 7 → the accumulator 8 → the compressor 2. The flow of refrigerant flowing through the external heat exchanger 5 is opposite in direction between the first refrigerant circulation passage and the second refrigerant circulation passage.

More specifically, a passage connecting to a discharge chamber of the compressor 2 is branched off into two passages. A first branched-off passage 221, which constitutes one of the branched-off passages, connects to one of ports of the external heat exchanger 5. And a second branched-off passage 223, which constitutes the other of the branched-off passages, connects to an inlet of the auxiliary condenser 3. The other of ports of the external heat exchanger 5 connects to an inlet of the evaporator 7 via a third passage 23. An outlet of the evaporator 7 connects to an inlet of the accumulator 8 via a fourth passage 24 (return passage). An outlet of the auxiliary condenser 3 connects to the third passage 23 via a second passage 22. A bypass passage 27 is branched off from the first branched-off passage 221, and this bypass passage 27 connects to the accumulator 8.

A first common passage 41, which is a common passage of the first refrigerant circulation passage, the second refrigerant circulation passage and the third refrigerant circulation passage, is formed downstream of a merging point with the bypass passage 27 in the fourth passage 24. Also, a second common passage 42, which is a common passage of the first refrigerant circulation passage and the third refrigerant circulation passage, is formed downstream of a merging point with the second passage 22 in the third passage 23. Also, an internal heat exchanger 10 is provided such that the first common passage 41 and the second common passage 42 are partially inserted to the internal heat exchanger 10.

A first control valve 204 is provided at a branch point of the first branched-off passage 221 and the second branched-off passage 223. A second control valve 206 is provided at a branch point of the second passage 22 and the third passage 23. A third control valve 9 is provided at a merging point of the fourth passage 24 and the bypass passage 27.

The compressor 2 is configured as a motor compressor that houses a motor and a compression mechanism within a housing. The compressor 2, which is driven by the current supplied from a not-shown battery, varies the refrigerant discharging capacity in response to the rotational speed of the motor.

The auxiliary condenser 3 functions as a supplementary or secondary condenser by which to radiate heat off the refrigerant separately from the external heat exchanger 5. That is, the heat is radiated when the high-temperature and high-pressure refrigerant discharged from the compressor 2 passes through the auxiliary condenser 3. The air led into the passenger compartment is heated up in a process where the air passes through the auxiliary condenser 3. In other words, of the air that has been taken into the duct and then cooled and dehumidified by the evaporator 7, the air that has been divided by a not-shown air mix door is appropriately heated up by passing through the auxiliary condenser 3. The air, which has passed through the auxiliary condenser 3, and the air, which has bypassed the auxiliary condenser 3 is mixed together in a location downstream of the auxiliary condenser 3, and then the thus mixed air is regulated at a target temperature.

The external heat exchanger 5 functions as an external condenser that radiates heat off the refrigerant passing through the inside during a cooling operation. On the other hand, the external heat exchanger 5 functions as an external evaporator that evaporates the refrigerant passing through the inside during a heating operation. When the external heat exchanger 5 functions as an evaporator, the low-temperature and low-pressure refrigerant having passed through an expansion device (i.e., a proportional valve 52 described later) evaporates as the refrigerant passes through the external heat exchanger 5.

The evaporator 7, which is installed inside the passenger compartment, functions as an internal evaporator that evaporates the refrigerant passing through the inside. That is, the low-temperature and low-pressure refrigerant having passed through an expansion device (i.e., a proportional valve 33 described later) evaporates as the refrigerant passes through the evaporator 7. The air led into the interior of a vehicle is cooled by the evaporative latent heat and then dehumidified. At this time, the air that has been cooled and dehumidified is heated in a process where the air passes through the auxiliary condenser 3.

The accumulator 8 is an apparatus where the refrigerant sent out from the evaporator is stored. The accumulator 8 has a liquid phase unit and a gas phase unit. Thus, even if a liquid refrigerant that exceeds an expected amount is delivered from the evaporator 7, such an extra liquid refrigerant can be stored in the liquid phase unit, so that the refrigerant in the gas phase unit can be sent to the compressor 2.

The first control valve 204 contains a proportional valve 34 and a proportional valve 37 in a common body. And the first control valve 204 is configured as a composite valve that drives the proportional valve 34 and the proportional valve 37 by a single actuator. The proportional valve 34 is a large-diameter valve and regulates the opening degree of the first branched-off passage 221. The proportional valve 37 is a large-diameter valve and regulates the opening degree of the second branched-off passage 223. In the present embodiment, a motor-operated valve, which is capable of regulating the opening degree of each valve, driven by a stepping motor is used as the first control valve 204. Instead, the first control valve 204 may be an electromagnetic valve capable of regulating the opening degree of each valve by supplying power to a solenoid.

The second control valve 206 is configured as a composite valve that contains a proportional valve 51 and a proportional valve 52 in a common body. The proportional valve 51 and the proportional valve 52 are driven by a common actuator. Although the proportional valve 33 functions as an expansion device in the present embodiment, too, the proportional valve 33 is structured separately from the second control valve 206. The proportional valve 51 is a large-diameter valve and regulates the opening degree of the second passage 22. The proportional valve 52, which is a composite valve having a large-diameter valve and a small-diameter valve, regulates the opening degree of the third passage 23. The proportional valve 52 functions as an expansion valve as well. In the present embodiment, a motor-operated valve, which is capable of regulating the opening degree of each valve, driven by a stepping motor is used as the second control valve 206. Instead, the second control valve 206 may be an electromagnetic valve capable of regulating the opening degree of each valve by supplying power to a solenoid. A concrete structure of the second control valve 206 will be discussed later. In a modification of the present embodiment, a thermostatic expansion valve may be provided in place of the proportional valve 33. Here, the thermostatic expansion valve detects the temperature at an outlet side of the evaporator 7 and regulates the flow rate of refrigerant so that superheat at the outlet side thereof can be suitable. Or alternatively, an orifice or other expansion devices may be provided.

The proportional valve 33 is provided downstream of a second internal passage. The proportional valve 33 also functions as an "expansion device" that throttles and expands the refrigerant, which has been led from the external heat exchanger 5 via the third passage 23 or which has been led from the auxiliary condenser 3 via the second passage 22, and then delivers the thus throttled and expanded refrigerant to a downstream side.

A third control valve 9 contains a proportional valve 35 and a proportional valve 36 in a common body. And the third control valve 9 is configured as a composite valve where the proportional valve 35 and the proportional valve 35 are driven by a single actuator. A first internal passage constituting the fourth passage 24 and a second internal passage constituting the bypass passage 27 are provided in the body of the third control valve 9. The proportional valve 35 is a large-diameter valve and is provided in the second internal passage. The large-diameter proportional valve 35 regulates the opening degree of the second internal passage. The proportional valve 36 is a large-diameter valve and is provided in the first internal passage. The large-diameter proportional valve 36 regulates the opening degree of the first internal passage. In the present embodiment, a motor-operated valve, which is capable of regulating the opening degree of each valve, driven by a stepping motor is used as the third control valve 9. Instead, the third control valve 9 may be an electromagnetic valve capable of regulating the opening degree of each valve by supplying power to a solenoid.

The first common passage 41 and the second common passage 42 are partially inserted to the internal heat exchanger 10 where the refrigerant flowing in the both first common passage 41 and the second common passage 42 is heat-exchanged. Thereby, the refrigerant flowing from the auxiliary condenser 3 or the external heat exchanger 5 toward the evaporator 7 is cooled by the refrigerant flowing from the accumulator 8 toward the compressor 2. And, at the same time, the refrigerant flowing from the accumulator 8 toward the compressor 2 is heated by the refrigerant flowing from the auxiliary condenser 3 or the external heat exchanger 5 toward the evaporator 7. As a result, the heat exchanger effectiveness in the refrigeration cycle is enhanced. As shown in FIG. 1, the merging point of the third passage 23 and the second passage 22 is located upstream of an inlet of the internal heat exchanger 10. The proportional valve 33 is provided downstream of an outlet of the internal heat exchanger 10.

The automotive air conditioner 200 configured as described above is controlled by a not-shown control unit. The control unit computes a controlled variable of each actuator in order to attain a room temperature set by a driver or a passenger of the vehicle and then outputs a control signal to the drive circuit of each actuator. The control unit determines the controlled variables, such as a valve opening degree and an open/close state of each valve, based on predetermined external information that has been detected by various sensors, and then supplies current to each actuator so as to realize the controlled variable. Here, the predetermined external information includes temperatures inside and outside the passenger compartment and the air-blowout temperature of the evaporator 7, for instance. Since, in the present embodiment, the stepping motor is used as the actuator, the control unit outputs a control pulse signal to the stepping motor to realize the controlled variable of each control valve. Through the control performed by the control unit, the compressor 2 introduces the refrigerant, having a suction pressure Ps, via a suction chamber, and compresses this refrigerant so as to be discharged as the refrigerant having a discharge pressure Pd. In the present embodiment, a plurality of temperature sensors are installed to achieve the above control. Here, the plurality of temperature sensors are used to detect the temperatures at the outlet of the auxiliary condenser 3, the port of the external heat exchanger 5, the inlet and outlet of the evaporator 7, and the inlet and the outlet of the internal heat exchanger 10, respectively.

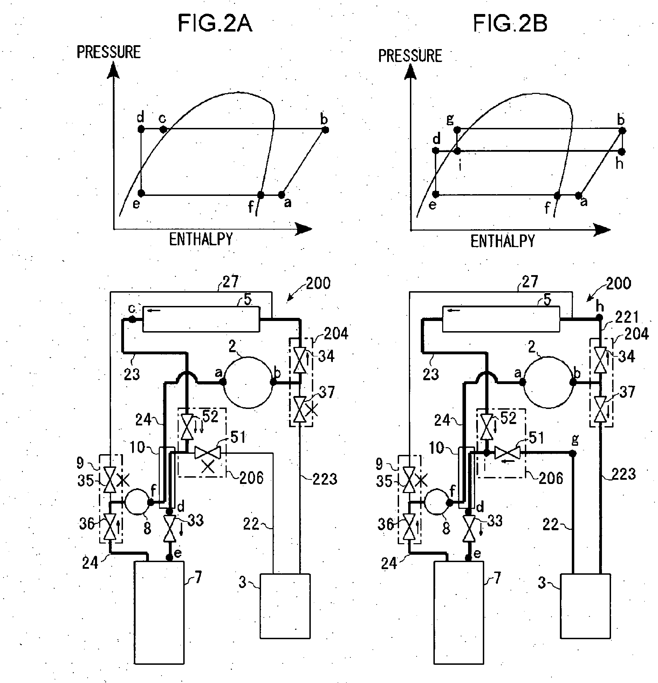

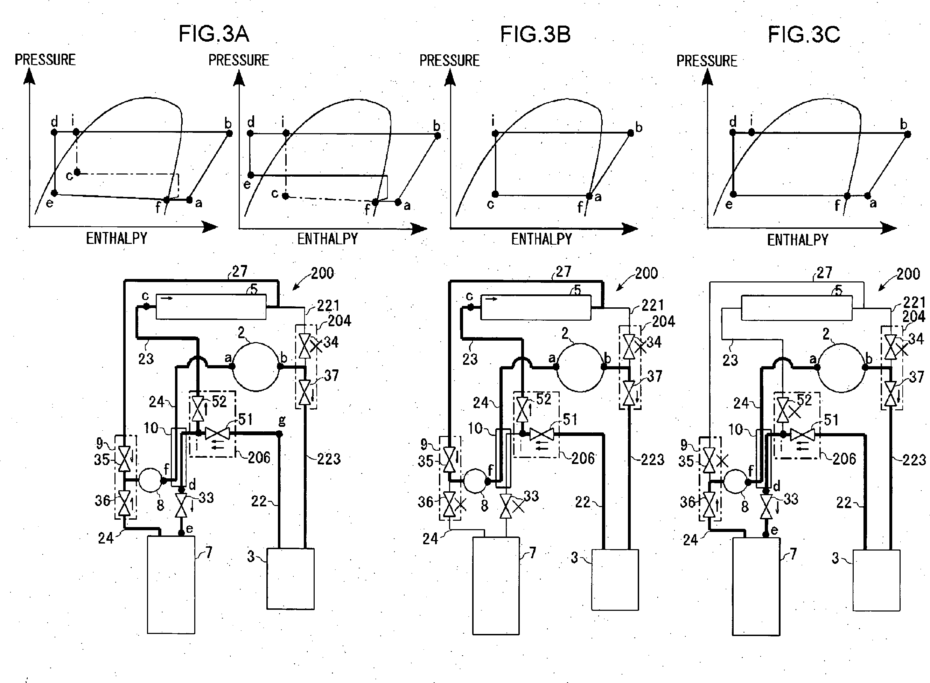

A description is now given of an operation of the refrigeration cycle in the present embodiment. FIGS. 2A and 2B and FIGS. 3A to 3C are each a diagram for explaining an operation of the automotive air conditioner. FIGS. 2A and 2B each shows a state during a cooling operation. FIG. 2A shows a state during a normal cooling operation. FIG. 2B shows a state during a specific cooling operation. FIGS. 3A to 3C each shows a state during a heating operation. FIG. 3A shows a state during a specific heating operation. FIG. 3B shows a state during a normal heating operation. FIG. 3C shows a state during a special heating operation. Note here that the "specific cooling operation" is an operating state or mode in which the dehumidifying capability in particular is enhanced in a cooling operation. The "specific heating operation" is an operating state or mode in which the dehumidifying capability in particular is enhanced in a heating operation. The "special heating operation" is an operating state or mode in which the external heat exchanger 5 is disabled.

A Mollier diagram for explaining an operation of refrigeration cycle is shown in the upper part of each of FIGS. 2A and 2B and FIGS. 3A to 3C. The horizontal axis of each Mollier diagram represents enthalpy, and the vertical axis thereof represents various pressures. An operating state of refrigeration cycle is shown below each of those Mollier diagrams. The bold lines and arrows in FIGS. 2A and 2B and FIGS. 3A to 3C indicate the flow of refrigerant, and the letters "a" to "i" correspond respectively to those of the Mollier diagrams. Also, "×" in FIGS. 2A and 2B and FIGS. 3A to 3C indicates that the flow thereof is being shut off.

As shown in FIG. 2A, the proportional valve 34 is open and the proportional valve 37 is closed in the first control valve 204 during a normal cooling operation. At this time, the proportional valve 34 is in a fully open state. Also, the proportional valve 51 is closed and the proportional valve 52 is open in the second control valve 206. The proportional valve 33 is open. Also, the proportional valve 35 is closed and the proportional valve 36 is open in the third control valve 9. Thereby, the first refrigerant circulation passage only is opened. Thus, the refrigerant discharged from the compressor 2 is led to the external heat exchanger 5 and the evaporator 7. At this time, the external heat exchanger 5 functions as an external condenser.

In other words, a high-temperature and high-pressure gaseous refrigerant discharged from the compressor 2 is condensed by passing through the external heat exchanger 5. Then the refrigerant, which has passed through the external heat exchanger 5, is adiabatically expanded at the proportional valve 33 so as to become a low-temperature and low-pressure gas-liquid two-phase refrigerant. This two-phase refrigerant is led into the evaporator 7. The refrigerant led into the inlet of the evaporator 7 evaporates in a process of passing through the evaporator 7, thereby cooling air inside the passenger compartment. The refrigerant led out from the evaporator 7 enters the accumulator 8 by way of the proportional valve 36. The control unit controls the opening degree of the proportional valve 33, based on the temperature at an outlet side of the external heat exchanger 5, so that the subcooling degree at the outlet side thereof can be suitable. Or the control unit controls the opening degree of the proportional valve 33, based on the temperature at an inlet side of the compressor 2, so that the subcooling degree at the inlet side thereof can be suitable. In the former case, the subcooling degree may be adjusted based on the temperature at an inlet side of the proportional valve 33 or at an inlet side of the internal heat exchanger 10.

At this time, the internal heat exchanger 10 conducts heat exchange between the refrigerant sent to the compressor 2 from the accumulator 8 and the refrigerant sent to the proportional valve 33 from the external heat exchanger 5. As a result, the difference in enthalpy between the inlet and the outlet of the evaporator 7 becomes large, and the coefficient of performance of refrigeration cycle becomes large. Thus the efficiency of a system and the refrigeration capacity can be enhanced.

As shown in FIG. 2B, both the proportional valve 34 and the proportional valve 37 are open in the first control valve 204 during a specific cooling operation. Also, both the proportional valve 51 and the proportional valve 52 are open in the second control valve 206. The proportional valve 33 is open. Also, the proportional valve 35 is closed and the proportional valve 36 is open in the third control valve 9. Thereby, the first refrigerant circulation passage and the third refrigerant circulation passage are opened, and the second refrigerant circulation passage is shut off. Thus, on one hand, the refrigerant discharged from the compressor 2 is led to the evaporator 7 via the external heat exchanger 5. On the other hand, the refrigerant discharged from the compressor 2 is led to the evaporator 7 via the auxiliary condenser 3. At this time, the external heat exchanger 5 functions as an external condenser.

In other words, a high-temperature and high-pressure gaseous refrigerant discharged from the compressor 2 is condensed by passing through the auxiliary condenser 3, on one hand, and passing through the external heat exchanger 5, on the other hand. Then the refrigerant, which has passed through the auxiliary condenser 3, and the refrigerant, which has passed through the external heat exchanger 5, are merged and the thus merged refrigerant is adiabatically expanded at the proportional valve 33 so as to become a low-temperature and low-pressure gas-liquid two-phase refrigerant. This two-phase refrigerant is led into the evaporator 7. Then the refrigerant evaporates in a process of passing through the evaporator 7, thereby cooling air inside the passenger compartment. At this time, the refrigerant led out from the evaporator 7 enters the compressor 2 by way of the accumulator 8. The control unit controls the opening degree of the proportional valve 33, based on the temperature at an inlet of the proportional valve 33 or at an inlet of the internal heat exchanger 10, so that the subcooling degree at the inlet thereof can be suitable. Or the control unit controls the opening degree of the proportional valve 33, based on the temperature at the inlet side of the compressor 2, so that the subcooling degree at the inlet side thereof can be suitable.

As shown in FIG. 3A, the proportional valve 34 is closed and the proportional valve 37 is open in the first control valve 204 during a specific heating operation. Also, both the proportional valve 51 and the proportional valve 52 are open in the second control valve 206. The proportional valve 33 is open. At this time, the small-diameter valve of the proportional valve 52 is open and the large-diameter valve thereof is closed and therefore the proportional valve 52 functions as an expansion device. Also, both the proportional valve 35 and the proportional valve 36 are open in the third control valve 9. Thereby, the first refrigerant circulation passage is shut off, and the second refrigerant circulation passage and the third refrigerant circulation passage are both opened. Thus, on one hand, the refrigerant discharged from the auxiliary condenser 3 is led to the external heat exchanger 5. On the other hand, the refrigerant discharged from the auxiliary condenser 3 is led to the evaporator 7. At this time, the external heat exchanger 5 functions as an external evaporator.

In other words, a high-temperature and high-pressure gaseous refrigerant discharged from the compressor 2 is condensed by passing through the auxiliary condenser 3. The refrigerant, which has been led out from the auxiliary condenser 3, is adiabatically expanded at the proportional valve 52, on one hand, so as to become a low-temperature and low-pressure gas-liquid two-phase refrigerant. This two-phase refrigerant is evaporated when passing through the external heat exchanger 5. The refrigerant, which has been led out from the external heat exchanger 5 is led into the accumulator 8 by way of the proportional valve 35. The refrigerant, which has been led out from the auxiliary condenser 3, is adiabatically expanded at the proportional valve 33, on the other hand, so as to become a low-temperature and low-pressure gas-liquid two-phase refrigerant. This two-phase refrigerant is evaporated when passing through the evaporator 7. The refrigerant, which has been led out from the evaporator 7 is led into the accumulator 8 by way of the proportional valve 36.

At this time, the control unit suitably regulates the ratio between the evaporation amount of refrigerant in the external heat exchanger 5 and the evaporation amount of refrigerant in the evaporator 7, for the purpose of properly performing the heat absorption by the external heat exchanger 5 and the dehumidification by the evaporator 7. The ratio between the evaporation amounts thereof in these evaporators, namely the external heat exchanger 5 and the evaporator 7, is controlled according to the ratio between the opening degree of the proportional valve 52 and the opening degree of the proportional valve 33. The control unit regulates the evaporation amounts in those evaporators, which are the external heat exchanger 5 and the evaporator 7, by adjusting the ratio between the opening degree of the proportional valve 52 and the opening degree of the proportional valve 33. In so doing, the control unit performs control such that the temperature at the outlet side of the evaporator 7 can be kept in a proper range in order that the evaporator 7 will not freeze.

Also, while one of the proportional valve 35 and the proportional valve 36 is being kept at a fully open state, the control unit regulates the opening degree of the other thereof. When, in the present embodiment, the temperature of the evaporator 7 is lower than the temperature of the external heat exchanger 5 as shown in an upper-left Mollier diagram of FIG. 3A, the opening degree of the proportional valve 35 is controlled while the proportional valve 36 is set to a fully open state. When, on the other hand, the temperature of the external heat exchanger 5 is lower than the temperature of the evaporator 7 as shown in an upper-right Mollier diagram of FIG. 3A, the opening degree of the proportional valve 36 is controlled while the proportional valve 35 is set to a fully open state.

If, for example, the temperature of the evaporator 7 is lower than the temperature of the external heat exchanger 5, as in the former case, and if superheat occurs on the outlet side of the external heat exchanger 5, control will be performed such that the superheat is brought close to a preset value (zero or a small proper value) by throttling the opening degree of the proportional valve 35. In such a case, the heat absorbing amount from outside in the external heat exchanger 5 is regulated by a throttled state of the proportional valve 35. In other words, the opening degree of the proportional valve 35 is throttled while the proportional valve 36 is kept at a fully open state, so that a pressure difference (ΔP=Po-Pe) between an evaporation pressure Po of the external heat exchanger 5 and a pressure Pe at the outlet of the evaporator 7 becomes proper. Hence, the ratio between the amount of circulating refrigerant to be evaporated at the external heat exchanger 5 and the amount thereof to be evaporated at the evaporator 7 can be regulated. That is, as the pressure difference ΔP becomes large, the amount thereof to be evaporated at the external heat exchanger 5 becomes relatively small (equivalently, the amount thereof to be evaporated at the evaporator 7 becomes relatively large). Conversely, as the pressure difference ΔP becomes small, the amount thereof to be evaporated at the external heat exchanger 5 becomes relatively large (equivalently, the amount thereof to be evaporated at the evaporator 7 becomes relatively small). The control unit appropriately regulates the pressure difference ΔP by controlling the opening degree of the proportional valve 35 in accordance with the superheat occurring on the outlet side of the external heat exchanger 5. Thereby, a dehumidification function during a specific heating operation can be ensured. Note here that the presence/absence of superheat and the level of superheat at the outlet side of the external heat exchanger 5 can be identified by detecting the temperatures at the inlet side and the outlet side of the external heat exchanger 5.

If, conversely, the temperature of the external heat exchanger 5 is lower than the temperature of the evaporator 7, as in the latter case, and if superheat occurs on the outlet side of the evaporator 7, control will be performed such that the superheat is brought close to a preset superheat (zero or a small proper value) by throttling the opening degree of the proportional valve 36. In other words, the opening degree of the proportional valve 36 is throttled while the proportional valve 35 is kept at a fully open state, so that a pressure difference (ΔP=Pe-Po) between the pressure Pe at the outlet of the evaporator 7 and the evaporation pressure Po of the external heat exchanger 5 becomes proper. Thereby, the dehumidification function during a specific heating operation can be ensured. Note here that the presence/absence of superheat and the level of superheat at the outlet side of the evaporator 7 can be identified by detecting the temperatures at the inlet side and the outlet side of the evaporator 7.

As shown in FIG. 3B, the proportional valve 34 is closed and the proportional valve 37 is open in the first control valve 204 during a normal heating operation. Also, the proportional valves 51 and 52 are open in the second control valve 206. The proportional valve 33 is closed. At this time, the proportional valve 52 functions as an expansion device. Also, the proportional valve 35 is open and the proportional valve 36 is closed in the third control valve 9. Thereby, the second refrigerant circulation passage only is opened. Thus, the refrigerant discharged from the auxiliary condenser 3 is led to the external heat exchanger 5 by way of the third passage 23. At this time, no refrigerant is supplied to the evaporator 7. Thus the evaporator 7 practically does not function as such. As a result, the external heat exchanger 5 only functions as an evaporator. The control unit controls the opening degree of the proportional valve 52, based on the temperature at the outlet side of the auxiliary condenser 3, so that the subcooling degree at the outlet side thereof can be suitable.

As shown in FIG. 3C, the proportional valve 34 is closed and the proportional valve 37 is open in the first control valve 204 during a special heating operation. Also, the proportional valve 51 is open and the proportional valve 52 is closed in the second control valve 206. The proportional valve 33 is open. Also, the proportional valve 35 is closed and the proportional valve 36 is open in the third control valve 9. Thereby, the third refrigerant circulation passage only is opened. Thus, the refrigerant discharged from the auxiliary condenser 3 is led to the evaporator 7 by way of the second passage 22. At this time, the external heat exchanger 5 practically does not function as such. The refrigerant led into the evaporator 7 evaporates in a process of passing through the evaporator 7, thereby dehumidifying air inside the passenger compartment. Such a special air conditioning operation functions effectively when it is difficult to absorb heat from outside, such as when the vehicle is in extremely cold environments. The control unit controls the opening degree of the proportional valve 33, based on the temperature at the outlet side of the auxiliary condenser 3, so that the subcooling degree at the outlet side thereof can be suitable. Or the control unit controls the opening degree of the proportional valve 33, based on the temperature at the inlet side of the compressor 2, so that the superheat at the inlet side thereof can be suitable.

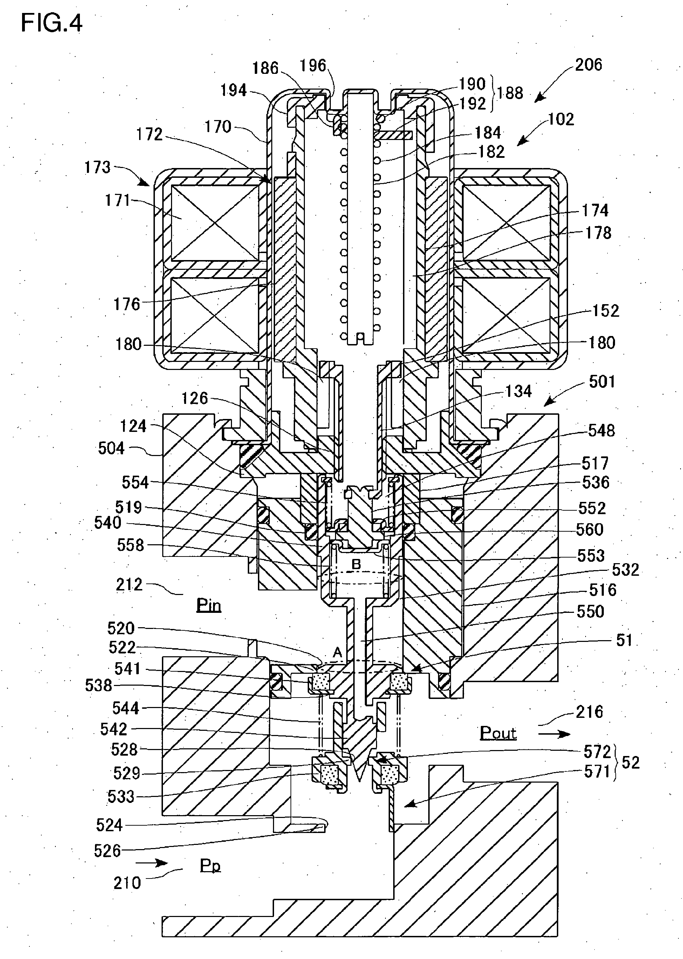

A description is now given of a concrete structure of the control valve according to the present embodiment. FIG. 4 to FIG. 7 are each a cross-sectional view showing a structure and operation of the second control valve 206. As shown in FIG. 4, the second control valve 206 is constituted as a motor-operated valve of stepping motor driven type and is configured by integrally assembling a valve unit 501 and a motor unit 102. The valve unit 501 is configured such that the proportional valve 51 and the proportional valve 52 are coaxially housed in a bottomed cylindrical body 504. The proportional valve 52 includes a large-diameter valve 571 and a small-diameter valve 572. The proportional valve 51 functions as a "first valve". The valve 571 functions as a "second valve", and the valve 572 functions as a "third valve". The proportional valve 51 and the proportional valve 52 (namely, the valve 571 and the valve 572) are opened or closed by a single motor unit 102.

A lead-in/out port 210 and a lead-in port 212 are provided at one side of the body 504, whereas a lead-out port 216 is provided at the other side thereof. The lead-in/out port 210 communicates with an upstream side of the third passage 23. The lead-in port 212 communicates with the second passage 22. The lead-out port 216 communicates with one of the inlets of the internal heat exchanger 10.

A cylindrical partition member 516 is disposed in an upper half of the body 504. The partition member 516 is concentrically assembled to the body 504 through the medium of a sealing member. A lower end of the partition member 516 forms a valve hole 520. Also, a valve seat 522 is formed by a lower-end opening end edge on the valve hole 520. A communication hole, which communicates the inside and the outside of the partition member 516 is provided in a surface opposite to the lead-in port 212 in the partition member 516.

A disk-shaped partition member 124 is disposed at an upper end of the body 504. The partition member 124 separates the interior of the valve unit 501 from the interior of the motor unit 102. A bearing part 126 having a circular boss shape is provided at a central part of the partition member 124. The bearing part 126 has an internal thread on an inner circumferential surface thereof and an outer circumferential surface thereof functions as a sliding bearing.

A cylindrical guide member 517 is provided such that the guide member 517 is held between the partition member 124 and the partition member 516. An O-ring 519 for sealing is provided between the guide member 517 and the partition member 516. Also, a valve hole 524 is formed coaxially with the valve hole 520 in a lower portion of the body 504. A valve seat 526 is formed by an upper-end opening end edge on the valve hole 524.

A driven member 532, a valve element 533, a valve actuating member 134, and a transmitting member 536 are disposed coaxially inside the body 504. The driven member 532 is of a stepped cylindrical shape. A valve portion 538 is provided in a lower half of the driven member 532, and a guide portion 540 is provided in an upper half thereof. The valve portion 538 and the guide portion 540 are integrally formed with each other through the medium of a reduced diameter portion. Here, the reduced diameter portion is a portion formed between the valve portion 538 and the guide portion 540. The valve portion 538 is disposed in a pressure chamber formed between the valve hole 520 and the valve hole 524. The guide portion 540 is disposed in a pressure chamber communicating with the lead-in port 212, and is slidably supported by the O-ring 519.

A large-diameter valve element 541 is provided at an upper end of the valve portion 538, whereas a small-diameter valve element 542 is provided at a lower end thereof. The valve element 541 has a ring-shaped elastic body (rubber in the present embodiment), which is attachable and detachable to and from the valve seat 522. And the valve element 541 regulates the opening degree of the proportional valve 51 by moving toward and away from the valve hole 520. The valve element 542 is constructed as a so-called needle valve element. In a large-diameter body of the valve element 533, the valve element 533 has a ring-shaped elastic body (rubber in the present embodiment), which is attachable and detachable to and from the valve seat 526. A plurality of legs (only one of these legs shown in FIG. 4 to FIG. 7), which slide along and are supported by the valve hole 524, extend in a lower end of the valve element 533. The valve element 533 regulates the opening degree of the valve 571 by moving toward and away from the valve hole 524.

A small-diameter valve hole 528 is formed inside the valve element 533. Inside the valve element 533, a valve seat 529 is formed by an upper-end opening end edge on the valve hole 528. The sharply pointed tip of the valve element 542 is inserted to and removed from the valve hole 528. In other words, the valve element 542 regulates the opening degree of the valve 572 by moving toward and away from the valve seat 529. A spring 544 is set between the valve element 533 and the valve element 541. The spring 544 biases the valve element 533 in a valve closing direction and functions as a "biasing member". The spring load of the spring 544 is relatively small, and the valve element 533 functions as a check valve.

A back pressure chamber 548 is formed between the guide portion 540 and the partition member 124. Also, a communication path 550, which runs through the driven member 532 in a direction of axis line, is formed. The communication path 550 communicates with the lead-out port 216 on a lateral side of the valve portion 538. With this structure, the back pressure chamber 548 is constantly filled with a fluid having a downstream-side pressure Pout led out from the lead-out port 216.

In the present embodiment, an effective diameter A of the valve hole 520 is set equal to an effective diameter **B** of a sliding portion of the guide portion 540 (the inside diameter of the O-ring 519). Thus, the effect of the refrigerant pressure acting on the driven member 532 is cancelled. In particular, provision of the O-ring 519 ensures an excellent sealing property of the sliding portion of the guide portion 540 and also prevents foreign particles or the like from being trapped in the sliding portion thereof.

A spring support member 552, a transmitting member 536, and a spring support member 553 are coaxially inserted inside the guide portion 540 of the driven member 532. The spring support member 552 is of a disk shape, and the transmitting member 536 penetrates a central part of the spring support member 552. A spring 554, which functions as a "biasing member", is set between an upper-end opening of the guide portion 540 and the spring support member 552. A spring 558, which functions as a "biasing member", is set between a lower end of the guide portion 540 and the spring support member 553.

The valve actuating member 134 and the driven member 532 are configured such that the valve actuating member 134 and the driven member 532 can be operatively coupled or linked to each other by way of the transmitting member 536. That is, an upper end of the transmitting member 536 penetrates a bottom of the valve actuating member 134, and a tip of the transmitting member 536 is swaged outwardly so as to be coupled to the valve actuating member 134. A stopper 560, which protrudes radially outward, is provided on a lateral side of the transmitting member 536. The stopper 560 is stopped by the spring support member 552, so that the valve actuating member 134 and the driven member 532 are configured in such a manner as to move together in an upward direction. Also, a lower end of the transmitting member 536 is stopped by the spring support member 553, so that the valve actuating member 134 and the driven member 532 are configured in such a manner as to move together in a downward direction.

When both the proportional valve 51 and the proportional valve 52 are open, the driven member 532 and the valve actuating member 134 are integrally displaced in a stretched state by the biasing forces of the springs 554 and 558. When either the proportional valve 51 or the proportional valve 52 becomes closed, the driven member 532 and the valve actuating member 134 become displaceable relative to each other in the direction of axis line. As the valve element 541 is seated on the valve seat 522 when the valve actuating member 134 moves in the upward direction so as to close the proportional valve 51, the displacement of the driven member 532 in the upward direction is restricted. Thus, a reaction force applied when the proportional valve 51 is being closed acts on the valve actuating member 134. However, the compression of the spring 554 relaxes the reaction force.

Also, as the valve element 542 is seated on the valve seat 529 when the valve actuating member 134 moves in the downward direction, with the valve 571 being closed, so as to close the valve 572, the displacement of the driven member 532 in the downward direction is restricted. Thus, a reaction force applied when the valve 572 is being closed acts on the valve actuating member 134. However, the compression of the spring 558 relaxes the reaction force. That is, the spring support member 552, the transmitting member 536, the spring support member 553, the spring 554 and the spring 558 constitute a "buffering mechanism" that relaxes the reaction force when the proportional valve 51 or the valve 572 is closed.

The spring loads of the springs 554 and 558 are each set so that each spring load is larger than a sliding friction, occurring between the driven member 532 and the O-ring 519, which is namely the sliding force of the driven member 532. As a result, the springs 554 and 558 are not compressed while the valve actuating member 134 and the driven member 532 operate together. Hence, the valve opening degrees of the proportional valve 51 and the proportional valve 52 can be accurately controlled.

The valve actuating member 134, which is of a stepped cylindrical shape, has an external thread on an outer circumference of the valve actuating member 134. The external thread is secured to the internal thread on the bearing part 126. A plurality of legs 152 (four legs 152 in the present embodiment) extending radially outward are provided at an upper end part of the valve actuating member 134, and the legs 152 are fitted to a rotor of the motor unit 102.

The valve actuating member 134 is rotated by the rotational driving force of the motor unit 102 and converts its rotative force into a translational force. That is, rotating the valve actuating member 134 displaces the valve actuating member 134 in the direction of axis line through a screw mechanism that functions as a "functioning conversion mechanism". As a result, each valve element is driven in an opening or closing direction.

Also, the motor unit 102 is configured as a stepping motor that includes a rotor 172 and a stator 173. The motor unit 102 is configured such that the motor unit 102 supports the rotor 172 in a freely rotatable manner inside a bottomed cylindrical sleeve 170. The stator 173 that houses a magnetizing coil 171 therein is provided on the outer periphery of the sleeve 170. A lower end opening of the sleeve 170 is assembled to the body 504, thereby constituting both the body 504 and a body of the second control valve 206.

The rotor 172 is comprised of a rotational shaft 174 formed in a cylindrical shape and a magnet 176 disposed on the periphery of the rotational shaft 174. In the present embodiment, the magnet 176 is magnetized to 24 poles. An internal space extending across almost entire length of the motor unit 102 is formed inside the rotational shaft 174. A guide portion 178 extending in parallel with the direction of axis line is provided at a specific position of inner circumferential surface of the rotational shaft 174. The guide portion 178 is used for the purpose of forming a raised part used to engage with a rotational stopper (described later), and the guide portion 178 is constituted by a single protrusion extending in parallel with the direction of axis line.

The diameter of a lower end of the rotational shaft 174 is slightly reduced, and four guide portions 180 extending in parallel with the direction of axis line are provided on the inner circumferential surface thereof. Each guide portion 180 is formed of a pair of protrusions extending in parallel with the direction of axis line, and the guide portions 180 are provided at every 90 degrees on the inner circumferential surface of the rotational shaft 174. The aforementioned four legs 152 of the valve actuating member 134 are fitted to the four guide portions 180, so that the rotor 172 and the valve actuating member 134 can rotate together, namely, they can rotate as a single unit. It is to be noted here, however, that a relative displacement of the valve actuating member 134 in the rotation direction in relation to the rotor 172 is restricted but the displacement thereof in the direction of axis line along the guide portions 180 is permitted. In other words, while the valve actuating member 134 rotates together with the rotor 172, the valve actuating member 134 is driven in an opening or closing direction of each valve element.

An elongated shaft 182 is provided, inside the rotor 172, along the axis line of the rotor 172. An upper end of the shaft 182 is press-fitted to a bottom center of the sleeve 170 and the shaft 182 is cantilevered thereby. Also, the shaft 182 extends into an internal space in parallel with the guide portion 178. The shaft 182 is disposed along the same axis line as that of the valve actuating member 134. A guide portion 184 in the shape of a spiral extending across almost entire length of the shaft 182 is formed on the shaft 182. The guide portion 184, which is formed of a coil-shaped material, is fitted on an exterior surface of the shaft 182. An upper end of the guide portion 184 is folded so as to form a stopper 186.

A rotational stopper 188 in the shape of a spiral is rotatably engaged with the guide portion 184. The rotational stopper 188 has a spiral engagement member 190, which joins with the guide portion 184, and a power-transmitting member 192, which is supported by the rotational shaft 174. The engagement member 190 has a shape of a single-turn coil, and the power-transmitting member 192 extending radially outward is formed connectedly on a lower end of the engagement member 190. A tip of the power-transmitting member 192 is joined together with the guide portion 178. That is, the power-transmitting member 192 abuts against a protrusion of the guide portion 178 so as to be stopped by the protrusion thereof. Thus, a relative displacement of the rotational stopper 188 in the rotation direction is restricted by the rotational shaft 174, whereas the rotational stopper 188 slides along the guide portion 178 and the displacement thereof in the direction of axis line is permitted.

In other words, the rotational stopper 188 integrally rotates with the rotor 172, and the engagement member 190 of the rotational stopper 188 is guided along the guide portion 184, so that the rotational stopper 188 is driven along the direction of axis line. It is to be noted here that the range within which the rotational stopper 188 is allowed to be driven in the direction of axis line is restricted by the stoppers formed at both ends of the guide portion 178. As the rotational stopper 188 is displaced upward and is stopped by the stopper 186, the position at which the rotational stopper 188 stops is a top dead point. As the rotational stopper 188 is displaced downward, the rotational stopper 188 is stopped at a bottom dead point.

An upper end of the rotor 172 is freely rotatably supported by the shaft 182 and a lower end thereof is freely rotatably supported by the bearing part 126. More specifically, a bottomed cylindrical end member 194 is so provided as to close and seal off an upper end opening of the rotational shaft 174, and a part of a cylindrical shaft 196 provided in a central position of the end member 194 is supported by a circular boss-shape part protruding from a bottom of the sleeve 170. That is, the bearing part 126 serves as a bearing part at one end side, whereas a sliding portion of the sleeve 170 relative to the cylindrical shaft 196 serves as a bearing part at the other end side.

The second control valve 206 as configured above functions as a control valve of stepping motor driven type capable of regulating the valve opening degree by controlling the drive of the motor unit 102. A not-shown control unit in an automotive air conditioner computes the number of steps for driving a stepping motor and then supplies the drive current (drive pulse) to the magnetizing coil 171. Thereby, the rotor 172 rotates and the valve actuating member 134 is rotated and driven. As a result, the open/close state and the opening degree of the proportional valve 51 and the proportional valve 52 is regulated.

FIG. 4 illustrates a case where the proportional valve 51 is closed and the proportional valve 52 is fully open. The second control valve 206 will be in this state during a normal cooling operation as shown in FIG. 2A, for instance. Then, a high refrigerant pressure Pp led from the lead-in/out port 210 causes the valve element 533, which then resists the biasing force of the spring 544, to move in an opening direction, thereby opening the valve 571. Since the valve seat 529 is displaced as a movable seat, the valve 572 is closed when the valve element 542 is seated on the valve seat 529.

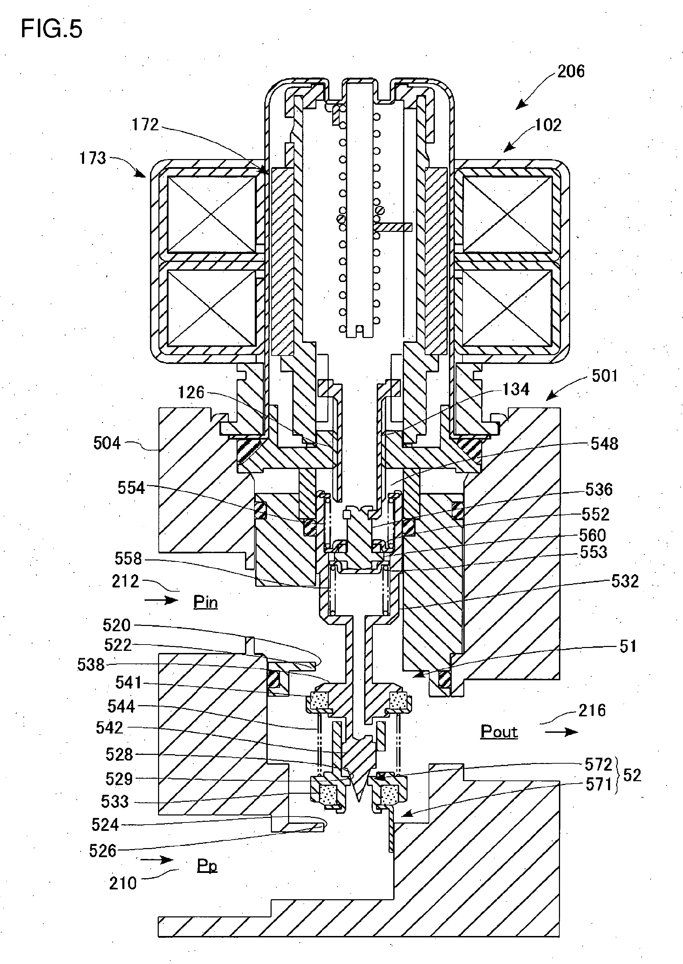

FIG. 5 illustrates a case where the proportional valves 51 and 52 are both open and the valve 571 of the proportional valve 52 is open. The second control valve 206 will be in this state during a specific heating operation as shown in FIG. 2B, for instance. That is, as the rotor 172 is rotated and driven in one direction (in the normal direction) from the state as shown FIG. 4, the driven member 532 is displaced in an opening direction of the proportional valve 51 and thereby both the proportional valve 51 and the proportional valve 52 are open. That is, while the valve actuating member 134, which rotates together with the rotor 172, moves to a lower position by the screw mechanism and then the transmitting member 536 is stopped by the spring support member 553, the valve actuating member 134 is displaced such that the valve actuating member 134 presses down on the valve portion 538. The opening degree of the proportional valve 51 is adjusted by a drive amount of the valve actuating member 134 and eventually by the drive amount of the valve portion 538.

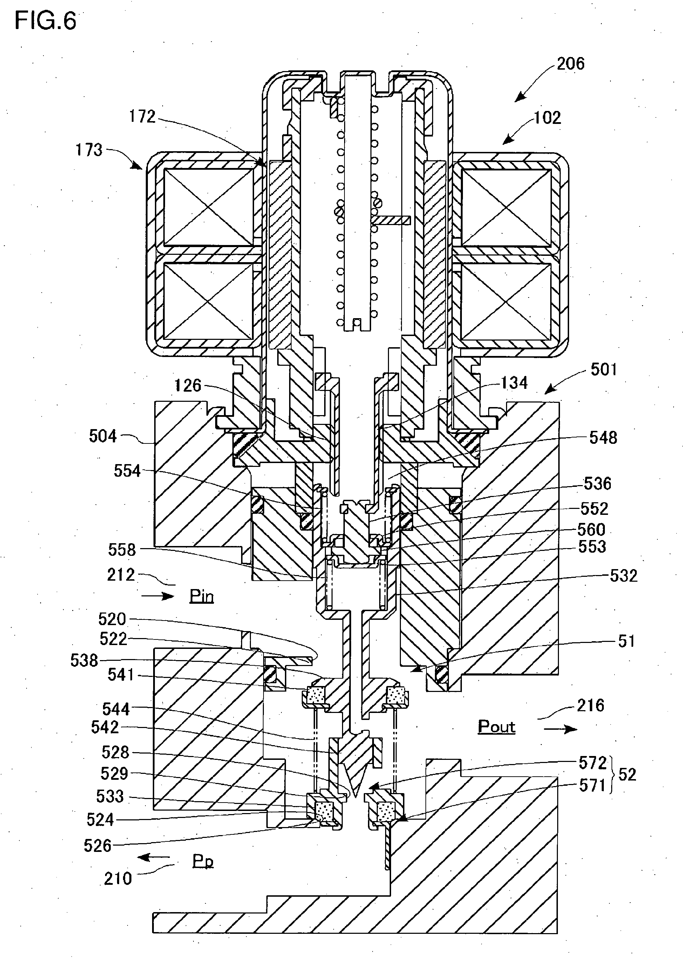

FIG. 6 illustrates a case where the proportional valves 51 and 52 are both open and the valve 572 of the proportional valve 52 is open. The second control valve 206 will be in this state during a specific heating operation as shown in FIG. 3A or a normal heating operation as shown in FIG. 3B, for instance. That is, if the flow direction of refrigerant differs even though the driven member 532 is in the same driven state as in FIG. 5, namely if the refrigerant flowing through the lead-in/out port 210 is of a low pressure, the valve element 533 will be seated on the valve seat 526 and thereby the valve 571 will be closed. Since, at the same time, the valve element 542 is hung by the valve actuating member 134, the valve element 542 gets spaced apart from the valve seat 529 and therefore the valve 572 is open. The opening degree of the valve 571 is adjusted by a drive amount of the valve actuating member 134 and eventually by the drive amount of the valve portion 538. The valve 571 functions as an expansion device.

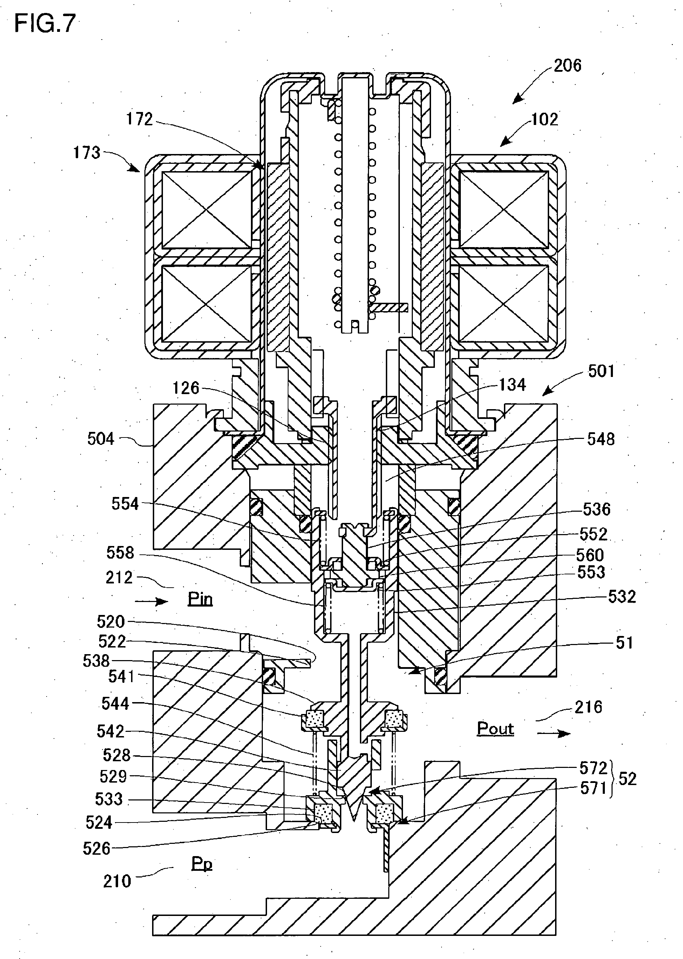

FIG. 7 illustrates a case where the proportional valve 51 is fully open and the proportional valve 52 is closed. The second control valve 206 will be in this state during a special heating operation as shown in FIG. 3C, for instance. Then, the valve portion 538 is driven down to a bottom dead point with the valve 571 being closed. Thereby, the valve element 542 is seated on the valve seat 529, and the valve 571 is closed. Also, when the valve portion 538 is stopped in this manner, the buffering mechanism (play) due to the spring 558 and so forth is in effect between the valve actuating member 134 and the driven member 532. Hence, no excessive pressure will exert on the valve seat 529.

The description of the present invention given above is based upon illustrative embodiments. These embodiments are intended to be illustrative only and it will be obvious to those skilled in the art that various modifications could be developed within the scope of the claims.

In the above-described embodiments, a description has been given of an example where the above-described control valves according to the exemplary embodiments are applied to an air conditioner of an electric-powered vehicle. This, however, should not be considered as limiting and it goes without saying that the control valves according to the preferred embodiments can be applied to an air conditioner of a vehicle provided with an internal-combustion engine and an air conditioner of a hybrid vehicle equipped with both an internal-combustion engine and an electric motor drive. Further, the control valves according to the preferred embodiments can be applied to an air conditioner installed elsewhere or in a location or system other than the vehicle.

In the above-described embodiments, a description has been given of an example where the stepping motor is used as an actuator for a composite valve but a solenoid or the like may be used as the actuator.

### DESCRIPTION OF THE REFERENCE NUMERALS

2 Compressor
3 Auxiliary condenser
5 External heat exchanger
7 Evaporator
8 Accumulator
9 Third control valve
10 Internal heat exchanger
12 Water heater
18 PTC heater
32, 33, 34, 35, 36, 37, 38, 51, 52 Proportional valve
102 Motor unit
134 Valve actuating member
172 Rotor
173 Stator
200 Automotive air conditioner
204 First control valve
206 Second control valve
210 Lead-in/out port
212 Lead-in port
216 Lead-out port
501 Valve unit
504 Body
520, 524, 528 Valve hole
532 Driven member
533 Valve element
536 Transmitting member
538 Valve portion
540 Guide portion
541, 542 Valve element
548 Back pressure chamber
550 Communication path
571, 572 Valve

## Claims

1. A control valve (206) comprising:
a common body (501) having:
a lead-in port (212) through which a working fluid is led into;
a lead-in/out port (210) through which the working fluid is led into or led out from;
a lead-out port (216) from which the working fluid is lead out;
a first valve hole (520) through which the lead-in port and the lead-out port communicate; and
a second valve hole (524) through which the lead-in/out port and the lead-out port communicate, the second valve hole being disposed along the same axis line as that of the first valve hole;
a first valve element (541) configured to regulate an opening degree of a first valve (51) by moving toward and away from the first valve hole (520);
a second valve element (533) configured to open and close a second valve (571) by moving toward and away from the second valve hole (524) and configured to communicate between the lead-in/out port (210) and the lead-out port (216), **characterised by** the second valve element (533) having a third valve hole (528) whose diameter is smaller than that of the second valve hole (524);
a third valve element (542) configured to regulate an opening of a third valve (572) by moving toward and away from the third valve hole (528), the third valve element (542) being provided in such a manner as to be integrally displaceable the first valve element (541),
a biasing member (544) configured to bias the second valve element (533) in a closing direction of the second valve (571) and in an opening direction of the third valve (572);
a common actuator (102) configured to electrically control the opening degrees of the first valve (511), the second valve (571) and the third valve (572); and
a valve actuating member (134) configured to be driven by the actuator (102) in a direction of axis line and configured to transmit a drive force, which acts in opening and closing directions of each valve, to the first valve element (541).

2. A control valve according to claim 1, further comprising:
a driven member (532) integrally including:
a valve portion (538) configured such that the first valve element (541) and the third valve element (542) are integrally provided; and
a guide portion (540) formed connectedly on an actuator side of the valve portion (538) and coupled to the valve actuating member (134); and a buffering mechanism configured to relax a reaction force acting on the valve actuating member when the first valve element or the third valve element is closed, the buffering mechanism being provided in a joining section where the guide portion and the valve actuating member (134) are coupled.

3. A control valve according to claim 2, wherein the buffering mechanism includes a pair of springs that are disposed counter to each other in such a manner that a stopper provided in the valve actuating member (134) is placed between the pair of springs in the direction of axis line, and
wherein an end portion of each spring opposite to the stopper is supported by the guide portion.

4. A control valve according to claim 2 or claim 3, wherein the guide portion (540) is slidably supported by the body, and a back pressure chamber is formed between the guide member and the body, wherein a communication path, which runs through the driven member (532), is provided, and
wherein the working fluid downstream of the first valve is led into the back pressure chamber via the communication path, and thereby an effect of fluid pressure acting on the driven member (532) is reduced.

5. A control valve according to any one of claim 1 to claim 4,
wherein a stepping motor including a rotor (172), which is rotated and driven, is used as the actuator,
the control valve (206) further comprising a functioning conversion mechanism, which rotates together with the rotor (172), configured to convert a rotative motion of the rotor about the axis line into a translational motion of the valve actuating member (134) in the direction of axis line.

## Patentansprüche

1. Steuerventil (206), welches folgendes aufweist:
einen gemeinsamen Ventilkörper (501) mit:
- einem Einlauf-Anschluss (212), durch welchen ein Arbeitsmedium eingeleitet wird;
- einem Einlauf-/Auslauf-Anschluss (210), durch welchen das Arbeitsmedium ein- oder ausgeleitet wird;
- einem Auslauf-Anschluss (216), aus welchem das Arbeitsmedium ausgeleitet wird;
eine erste Ventilöffnung (520), über welche der Einlauf-Anschluss und der Auslauf-Anschluss miteinander in Verbindung stehen, sowie einer zweiten Ventilöffnung (524), über welche der Einlauf-/Auslauf-Anschluss und der Auslauf-Anschluss miteinander in Verbindung stehen, wobei die zweite Ventilöffnung entlang der gleichen Achslinie wie die der ersten Ventilöffnung angeordnet ist;
ein erstes Ventilelement (541), das so ausgelegt ist, dass es einen Öffnungsgrad eines ersten Ventils (51) regelt, indem es sich zur ersten Ventilöffnung (520) hin und von dieser weg bewegt;
ein zweites Ventilelement (533), das so ausgelegt ist, dass es ein zweites Ventil (571) öffnet und schließt, indem es sich zu der zweiten Ventilöffnung (524) hin und von dieser weg bewegt und das so gestaltet ist, dass es eine Verbindung zwischen dem Einlauf-/Auslauf-Anschluss (210) und dem Auslauf-Anschluss (216) herstellt,
**dadurch gekennzeichnet, dass** das zweite Ventilelement (533) eine dritte Ventilöffnung (528) aufweist, deren Durchmesser kleiner als der Durchmesser der zweiten Ventilöffnung (524) ist;
dass ein drittes Ventilelement (542) so ausgelegt ist, dass es eine Öffnung eines dritten Ventils (572) regelt, indem es sich zur dritten Ventilöffnung (528) hin und von dieser weg bewegt, wobei das dritte Ventilelement (542) in der Weise vorgesehen ist, dass es relativ zu dem ersten Ventilelement (521) integral verlagerbar ist;
dass ein Vorspannteil (544) so ausgelegt ist, dass es das zweite Ventilelement (533) in einer Schließrichtung des zweiten Ventils (571) und in einer Öffnungsrichtung des dritten Ventils (572) vorspannt;
dass ein gemeinsames Stellglied (102) so ausgelegt ist, dass es die Öffnungsgrade des ersten Ventils (511), des zweiten Ventils (571) und des dritten Ventils (572) elektrisch steuert, und
dass ein Ventilbetätigungsteil (134) so ausgelegt ist, dass es von dem Stellteil (1029 in einer Richtung der Achslinie angetrieben wird und so gestaltet ist, dass es eine Antriebskraft, welche in Öffnungs- und Schließrichtung jedes Ventils wirkt, auf das erste Ventilelement (541) überträgt.

2. Steuerventil nach Anspruch 1, welches des Weiteren folgendes aufweist:
ein Abtriebsteil (532), welches integral umfasst:
einen Ventilabschnitt (538), der so ausgelegt ist, dass das erste Ventilelement (541) und das dritte Ventilelement (542) integral vorgesehen sind; und
einen Führungsabschnitt (540), der auf der Stellteilseite des Ventilabschnitts (538) ausgebildet und verbunden und mit dem Ventilbetätigungsteil (134) gekoppelt ist; und
eine Puffermechanik, die so ausgelegt ist, dass sie eine Reaktionskraft, die auf das Ventilbetätigungsteil einwirkt, wenn das erste Ventilelement oder das dritte Ventilelement geschlossen wird, abfängt, wobei die Puffermechanik in einem Anschlussbereich vorgesehen ist, in dem der Führungsabschnitt und das Ventilbetätigungsteil (134) angekoppelt sind.

3. Steuerventil nach Anspruch 2, bei welchem die Puffermechanik ein Paar Federn umfasst, die einander entgegengesetzt so angeordnet sind, dass ein in dem Ventilbetätigungsteil (134) vorgesehener Anschlag zwischen dem Paar Federn in Richtung der Achslinie angeordnet ist, und
bei welchem ein Endabschnitt jeder Feder gegenüber dem Anschlag durch den Führungsabschnitt abgestützt wird.

4. Steuerventil nach Anspruch 2 oder Anspruch 3, bei welchem der Führungsabschnitt (540) gleitend von dem Ventilkörper abgestützt wird, und zwischen dem Führungsteil und dem Ventilkörper eine Gegendruckkammer ausgebildet ist, in welcher ein Verbindungspfad, der durch das Abtriebsteil (532) verläuft, vorgesehen ist, und bei welchem das Arbeitsmedium abströmseitig vom ersten Ventil über den Verbindungspfad in die Gegendruckkammer geleitet wird und dadurch eine Wirkung des Strömungsmitteldrucks, der auf das Abtriebsteil (532) einwirkt, verringert wird.

5. Steuerventil nach einem der Ansprüche 1 bis 4, bei welchem ein Schrittmotor mit einem Läufer (172), der in Drehung versetzt und angetrieben wird, als Stellteil eingesetzt wird,
wobei das Steuerventil (206) des Weiteren eine Funktions-Umwandlungsmechanik aufweist, welche sich zusammen mit dem Läufer (172) dreht und so ausgelegt ist, das sie eine Drehbewegung des Läufers um die Achslinie in eine geradlinige Bewegung des Ventilbetätigungsteils (134) in Richtung der Achslinie umsetzt.

## Revendications

1. Vanne de commande (206) comprenant :
un corps commun (501) comportant :
un orifice d'entrée (212) à travers lequel un fluide de travail est entré ;
un orifice d'entrée/sortie (210) à travers lequel le fluide de travail est entré ou sorti ;
un orifice de sortie (216) à partir duquel le fluide de travail est sorti ;
un premier trou de vanne (520) à travers lequel l'orifice d'entrée et l'orifice de sortie communiquent ; et
un deuxième trou de vanne (524) à travers lequel l'orifice d'entrée/sortie et l'orifice de sortie communiquent, le deuxième trou de vanne étant disposé le long de la même ligne d'axe que celle du premier trou de vanne ;
un premier élément de vanne (541) configuré pour réguler un degré d'ouverture d'une première vanne (51) en s'approchant et en s'éloignant du premier trou de vanne (520) ;
un deuxième élément de vanne (533) configuré pour ouvrir et fermer une deuxième vanne (571) en s'approchant et en s'éloignant du deuxième trou de vanne (524) et configuré pour la communication entre l'orifice d'entrée/sortie (210) et l'orifice de sortie (216), **caractérisée en ce que** le deuxième élément de vanne (533) comporte un troisième trou de vanne (528) dont le diamètre est plus petit que celui du deuxième trou de vanne (524) ;
un troisième élément de vanne (542) configuré pour réguler une ouverture d'une troisième vanne (572) en s'approchant et en s'éloignant du troisième trou de vanne (528), le troisième élément de vanne (542) étant prévu de manière à ce qu'il puisse être déplacé intégralement par rapport au premier élément de vanne (541) ;
un élément de sollicitation (544) configuré pour solliciter le deuxième élément de vanne (533) dans une direction de fermeture de la deuxième vanne (571) et dans une direction d'ouverture de la troisième vanne (572) ;
un actionneur commun (102) configuré pour commander électriquement les degrés d'ouverture de la première vanne (551), de la deuxième vanne (571) et de la troisième vanne (572) ; et
un élément d'actionnement de vanne (134) configuré pour être entraîné par l'actionneur (102) dans une direction de ligne d'axe et configuré pour transmettre une force d'entraînement, qui agit dans les directions d'ouverture et de fermeture de chaque vanne, au premier élément de vanne (541).

2. Vanne de commande selon la revendication 1, comprenant en outre :
un élément entraîné (532) comprenant d'un seul tenant :
une partie de vanne (538) configurée de sorte que le premier élément de vanne (541) et le troisième élément de vanne (542) soient prévus d'un seul tenant ; et
une partie de guidage (540) formée de manière reliée d'un côté d'actionneur de la partie de vanne (538) et accouplée à l'élément d'actionnement de vanne (134) ; et
un mécanisme tampon configuré pour relâcher une force de réaction agissant sur l'élément d'actionnement de vanne lorsque le premier élément de vanne ou le troisième élément de vanne est fermé, le mécanisme tampon étant prévu dans une section de jonction où la partie de guidage et l'élément d'actionnement de vanne (134) sont accouplés.

3. Vanne de commande selon la revendication 2, dans laquelle le mécanisme tampon comprend une paire de ressorts qui sont disposés à l'opposé l'un de l'autre de manière à ce qu'une butée prévue dans l'élément d'actionnement de vanne (134) soit placée entre la paire de ressorts dans la direction de ligne d'axe, et
dans laquelle une partie d'extrémité de chaque ressort face à la butée est supportée par la partie de guidage.

4. Vanne de commande selon la revendication 2 ou la revendication 3, dans laquelle la partie de guidage (540) est supportée de manière coulissante par le corps, et une chambre de contre-pression est formée entre l'élément de guidage et le corps,
dans laquelle un trajet de communication, qui s'étend à travers l'élément entraîné (532), est prévu, et
dans laquelle le fluide de travail en aval de la première vanne est amené dans la chambre de contre-pression par l'intermédiaire du trajet de communication, et de ce fait un effet de la pression de fluide agissant sur l'élément entraîné (532) est réduit.

5. Vanne de commande selon l'une quelconque des revendications 1 à 4,
dans laquelle un moteur pas-à-pas comprenant un rotor (172), qui est mis en rotation et entraîné, est utilisé en tant qu'actionneur,
la vanne de commande (206) comprenant en outre un mécanisme de conversion de fonctionnement, qui tourne avec le rotor (172), configuré pour convertir un mouvement de rotation du rotor autour de la ligne d'axe en un mouvement de translation de l'élément d'actionnement de vanne (134) dans la direction de la ligne d'axe.
